# EUROPÄISCHE PATENTSCHRIFT

(11) **EP 2 983 008 B1**
(45) Veröffentlichungstag und Bekanntmachung des Hinweises auf die Patenterteilung: **14.03.2018**
(21) Anmeldenummer: 15178417.0
(22) Anmeldetag: 27.07.2015
(51) Int. Cl.: G01S 13/86, G01S 15/93, G01S 13/93, G01S 7/521, H01Q 1/32, H01Q 1/44, H01Q 9/04, G01S 7/03

(54) **SENSORVORRICHTUNG MIT KOMBINIERTEM ULTRASCHALLSENSOR UND RADARSENSOR ZUM ERFASSEN EINES OBJEKTS IN EINEM UMFELD EINES KRAFTFAHRZEUGS UND KRAFTFAHRZEUG**
SENSOR DEVICE WITH COMBINED ULTRASONIC SENSOR AND RADAR SENSOR FOR DETECTING AN OBJECT IN AN ENVIRONMENT OF A MOTOR VEHICLE AND MOTOR VEHICLE
DISPOSITIF DE CAPTEUR AYANT UN CAPTEUR À ULTRASONS COMBINÉ AVEC UN CAPTEUR RADAR DESTINÉ À DETECTER UN OBJET DANS UN ENVIRONNEMENT D'UN VÉHICULE AUTOMOBILE ET VÉHICULE AUTOMOBILE

(30) Priorität: 05.08.2014 DE 102014111097
(43) Veröffentlichungstag der Anmeldung: 10.02.2016
(73) Patentinhaber: Valeo Schalter und Sensoren GmbH, 74321 Bietigheim-Bissingen (DE)
(72) Erfinder: Dr. Rudolf, Thomas, 74321 Bietigheim-Bissingen (DE); Kuenzler, Frank, 74321 Bietigheim-Bissingen (DE); Dr. Papziner, Uwe, 74321 Bietigheim-Bissingen (DE)

(56) Entgegenhaltungen:
- DE-A1- 10 063 437
- DE-A1-102006 033 693
- DE-A1-102010 025 194
- DE-A1-102012 109 838
- US-A- 5 754 123

## Beschreibung

Die Erfindung betrifft eine Sensorvorrichtung für ein Kraftfahrzeug zum Bestimmen eines Abstandes von dem Kraftfahrzeug zu einem Objekt in einem Umgebungsbereich des Kraftfahrzeuges mit einem Ultraschallsensor, welcher eine Ultraschallmembran zum Aussenden eines Ultraschallsignals aufweist, wobei der Ultraschallsensor dazu ausgelegt ist, das Objekt anhand dem von dem Objekt reflektierten Ultraschallsignal zu erfassen, und einem Radarsensor, welcher zumindest eine Radarantenne zum Aussenden einer elektromagnetischen Welle aufweist, wobei der Radarsensor dazu ausgelegt ist, das Objekt anhand der von dem Objekt reflektierten elektromagnetischen Welle zu erfassen. Die Erfindung betrifft außerdem ein Kraftfahrzeug mit einer derartigen Sensorvorrichtung, wie auch ein Verfahren zum Herstellen einer derartigen Sensorvorrichtung.

Sensorvorrichtungen für ein Kraftfahrzeug zum Bestimmen eines Abstandes von dem Kraftfahrzeug zu einem Objekt in einem Umgebungsbereich des Kraftfahrzeuges sind aus dem Stand der Technik bekannt. So wird beispielsweise ein Ultraschallsensor, weicher eine Ultraschallmembran zum Aussenden eines Ultraschallsignals aufweist, und dazu ausgelegt ist, das Objekt anhand dem, von dem Objekt reflektierten, Ultraschallsignal zu erfassen, verwendet. Eine Bestimmung des Abstandes von dem Kraftfahrzeug zu dem Objekt geschieht üblicherweise mit einer Laufzeitmessung. Die Laufzeitmessung berücksichtigt die Zeit, welche zwischen dem Aussenden und dem Empfangen des Ultraschallsignals verstreicht in Kombination mit einer Geschwindigkeit des Ultraschallsignals, beispielsweise der Schallgeschwindigkeit. Ultraschallsensoren werden üblicherweise eingesetzt, um Objekt in einem Abstand von 10 cm bis 10 m zu dem Kraftfahrzeug zu erfassen.

Eine weitere Sensorvorrichtung für das Kraftfahrzeug zum Bestimmen des Abstandes von dem Kraftfahrzeug zu dem Objekt in dem Umgebungsbereich des Kraftfahrzeuges, welche aus dem Stand der Technik bekannt ist, sieht einen Radarsensor vor. Der Radarsensor weist eine Radarantenne zum Aussenden einer elektromagnetischen Welle auf und ist dazu ausgelegt, das Objekt anhand der von dem Objekt reflektierten elektromagnetischen Welle zu erfassen. Das Bestimmen des Abstandes von dem Kraftfahrzeug zu dem Objekt mittels des Radarsensors kann auch mit dem Verfahren der Laufzeitmessung erfolgen oder einem Phasenvergleichsverfahren. Mit einem Radarsensor können Objekten bis zum einem Abstand von 70 m zu dem Kraftfahrzeug erfasst werden.

US5754123 offenbart eine Sensorvorrichtung gemäß dem Oberbegriff. DE102006033693 offenbart einen Hindernisdetektor, der einen Ultraschallsensor und Radarsensor umfasst. An dem genannten Stand der Technik ist nachteilig, dass ein gemeinsamer Einsatz des Ultraschallsensors und des Radarsensors einen hohen Platzverbrauch innerhalb des Kraftfahrzeugs darstellt. Weiterhin ist der Radarsensor häufig hinter einer Verkleidung des Kraftfahrzeugs angeordnet ist, so dass die elektromagnetischen Wellen wegen der Verkleidung abgeschwächt werden.

Es ist Aufgabe der Erfindung, eine Sensorvorrichtung der eingangs genannten Gattung bereitzustellen, welche kompakt ausgebildet ist und mit der zudem gewährleistet werden kann, dass das Objekt in der Umgebung des Kraftfahrzeugs zuverlässiger erfasst werden kann.

Diese Aufgabe wird erfindungsgemäß durch eine Sensorvorrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Sensorvorrichtung für ein Kraftfahrzeug dient zum Bestimmen eines Abstandes von dem Kraftfahrzeug zu einem Objekt in einem Umgebungsbereich des Kraftfahrzeuges. Die Sensorvorrichtung umfasst einen Ultraschallsensor, weicher eine Ultraschallmembran zum Aussenden eines Ultraschallsignals aufweist, wobei der Ultraschallsensor dazu ausgelegt ist, das Objekt anhand dem von dem Objekt reflektierten Ultraschallsignal zu erfassen. Zudem umfasst die Sensorvorrichtung einen Radarsensor, welcher zumindest eine Radarantenne zum Aussenden einer elektromagnetischen Welle aufweist, wobei der Radarsensor dazu ausgelegt ist, das Objekt anhand der von dem Objekt reflektierten elektromagnetischen Welle zu erfassen. Erfindungsgemäß ist vorgesehen, dass die zumindest eine Radarantenne auf der Ultraschallmembran angeordnet ist.

Durch die erfindungsgemäße Sensorvorrichtung ist es möglich, mit nur einer Sensorvorrichtung, eine Sensorvorrichtung zur Verfügung zu stellen, welche die Vorteile des Ultraschallsensors und des Radarsensors vereint. Gleichzeitig wird weniger Platz bzw. Raum des Kraftfahrzeugs durch einen Einbau der Sensorvorrichtung beansprucht. Vorteilhaft ist also der geringere Platzanspruch der Sensorvorrichtung im Vergleich zu dem getrennt vorliegenden Ultraschallsensor und dem getrennt vorliegenden Radarsensor.

In einer Ausführungsform ist vorgesehen, dass die zumindest eine Radarantenne als Patchantenne ausgebildet ist. Die Patchantenne kann eine rechteckige Form aufweisen, deren Längsseite einer Hälfte der Wellenlänge (λ/2) der elektromagnetischen Welle entspricht. Damit kann die Fläche ähnlich wie bei Dipolantennen als Resonator wirken. Weiterhin kann die Patchantenne besonders gut auf einer Leiterplatte integriert werden oder direkt durch Leitplattentechnik gefertigt werden. Ein weiterer Vorteil der Patchantenne ist, dass diese einfach herstellbar und anpassbar ist.

Insbesondere ist vorgesehen, dass die Ultraschallmembran aus Aluminium gefertigt ist. Das Aluminium hat den Vorteil, dass dadurch Gewicht eingespart werden kann und es eine hohe Korrosionsbeständigkeit aufweist. Weiterhin ist es widerstandsfähig, erlaubt aber eine flexible Formgebung. Die Ultraschallmembran kann derart ausgebildet sein, dass sie eine Resonanzfrequenz von 52 kHz aufweist. Die Ultraschallmembran kann mit einem entsprechenden Aktor zum Erzeugen der Ultraschallsignale angetrieben werden.

In einer weiteren Ausgestaltung ist vorgesehen, dass zwischen der Ultraschallmembran und der zumindest einen Radarantenne ein elektrisches Isolationselement angeordnet ist. Der Vorteil ist, dass dadurch ein Kurzschluss zwischen der Radarantenne und der Ultraschallmembran verhindert werden kann. Das elektrische Isolationselement kann beispielsweise aus einem Kunststoff gebildet sein. Alternativ dazu kann eine Keramik als das elektrische Isolationselement verwendet werden. Das elektrische Isolationselement kann auch derart ausgebildet sein, dass es beständig gegenüber Feuchtigkeit ist. Es kann aber auch grundsätzlich jedes andere Material für die Herstellung des elektrischen Isolationselements verwendet werden, welches den Stromfluss von der Ultraschallmembran zu der Radarantenne verhindert. Das elektrische Isolationselement kann als Beschichtung ausgebildet sein, die auf eine Oberfläche der Ultraschallmembran aufgebracht ist. Dabei kann die komplette Oberfläche der Ultraschallmembran mit dem elektrischen Isolationselement bedeckt sein. Alternativ dazu kann das elektrische Isolationselement nur in dem Bereich zwischen der Ultraschallmembran und der zumindest einen Radarantennen angeordnet sein.

Bevorzugt wird die zumindest eine Radarantenne aus Kupfer gefertigt. Vorteilhaft daran ist, dass Kupfer ein sehr guter elektrischer Leiter ist. Ergänzend oder alternativ kann Silber oder Aluminium verwendet werden. Eine Radarantenne aus Kupfer kann zudem einfach und kostengünstig in Leiterplattentechnik hergestellt werden.

Insbesondere ist es vorgesehen, dass die Sensorvorrichtung zumindest ein Zuleitungselement zum elektrischen Kontaktieren der zumindest einen Radarantenne umfasst, wobei das zumindest eine Zuleitungselement aus dem gleichen Material wie die zumindest eine Radarantenne gefertigt ist. Vorteilhaft daran ist eine Vereinfachung des Herstellungsprozesses, sowie das Ermöglichen einer zuverlässigen Berechnung eines elektrischen Widerstandes des zumindest einen Zuleitungselements. Das Zuleitungselement kann zusammen mit der Radarantenne hergestellt werden. Auf diese Weise können die Herstellungskosten reduziert werden.

In einer weiteren Ausführungsform ist es vorgesehen, dass die zumindest eine Radarantenne zusätzlich dazu ausgebildet ist, die von dem Objekt reflektierte elektromagnetische Welle zu empfangen. Die Radarantenne, die zum Aussenden des Radarsignals bzw. der elektromagnetischen Welle vorgesehen ist, kann somit zudem als Empfangsantenne zum Empfangen der von dem Objekt reflektierten elektromagnetischen Welle dienen. Vorteilhaft daran ist, dass Bauraum und Material eingespart werden können.

Weiterhin kann es vorgesehen sein, dass der Radarsensor zumindest zwei Radarantennen umfasst, wobei die zumindest zwei Radarantennen gleichmäßig verteilt auf der Ultraschallmembran angeordnet sind. Die zumindest zwei Radarantennen haben den Vorteil, dass dadurch eine räumliche Auflösung des Radarsensors erhöht werden kann, da die Auflösung mit der Anzahl der Antennen zunimmt. Die gleichmäßige Verteilung der zumindest zwei Radarantennen auf der Ultraschallmembran hat außerdem den Vorteil, dass eine Schwingungsbewegung der Ultraschallmembran nur geringfügig beeinflusst wird. Wären die zumindest zwei Radarantennen ungleichmäßig, beispielsweise in einem Randbereich der Ultraschallmembran, angeordnet, so wäre die Schwingungsbewegung bzw. die Schwingungsmode der Ultraschallmembran weniger gleichmäßig. Die Abmessungen der Ultraschallmembran und/oder die Masse der Ultraschallmembran kann in Abhängigkeit von der Anzahl und der jeweiligen Masse der Radarantennen angepasst werden.

Insbesondere sind die zumindest zwei Radarantennen bezüglich zumindest einer Symmetrieachse der Ultraschallmembran symmetrisch zueinander angeordnet. Beispielsweise können die zumindest zwei Radarantennen bezüglich zumindest einer Symmetrieachse der Ultraschallmembran achsensymmetrisch zueinander angeordnet sein. Dies bringt den Vorteil mit sich, dass dadurch ein Schwingungsverhalten der Ultraschallmembran durch die aufgebrachten Radarantennen gleichmäßig beeinflusst wird. Somit entstehen keine ungleichmäßigen Schwingformen bzw. Eigenschwingformen der Ultraschallmembran.

Weiterhin ist es vorteilhaft, wenn die zumindest zwei Radarantennen entlang einer Erstreckungsrichtung der Ultraschallmembran, welche im bestimmungsgemäßen Einbau des Ultraschallsensors in dem Kraftfahrzeug parallel zu einer Fahrbahnoberfläche verläuft, nebeneinander angeordnet sind. Dies ist vorteilhaft, da somit ein Horizontalwinkel des Objekts bestimmt werden kann. Der Horizontalwinkel kann ermittelt werden, indem bestimmt wird, wie lange eine Laufzeit der elektromagnetischen Welle zu der einen der zumindest zwei Radarantennen und zu der anderen der zumindest zwei Radarantennen ist. Selbstverständlich ist die Anordnung nicht auf zwei Radarantennen beschränkt, sondern kann sich auf bis zu 16 Radarantennen und mehr erweitertet werden. Es gilt auch wieder, dass die Auflösung des Radarsensors bezüglich des Umgebungsbereichs mit steigender Anzahl der Radarantennen erhöht wird. Dies gilt auch für die Auflösung bei der Bestimmung des Horizontalwinkels.

Ebenfalls kann es vorgesehen sein, dass eine erste der zumindest zwei Radarantennen zum Aussenden der elektromagnetischen Welle ausgebildet ist und eine zweite der zumindest zwei Radarantennen zum Empfangen der von dem Objekt reflektierten elektromagnetischen Welle ausgebildet ist. Dies ist vorteilhaft, weil die Radarantennen unterschiedlich ausgebildet sein können. Dabei kann die Radarantenne, welche zum Empfangen der von dem Objekt reflektierten elektromagnetischen Welle dient, eine hohe Empfindlichkeit bezüglich des Empfangens der elektromagnetischen Wellen in dem Frequenzbereich der elektromagnetischen Welle aufweisen. Die Radarantenne, welche zum Aussenden der elektromagnetischen Welle dient, kann so ausgelegt sein, dass sie eine hohe Sendeleistung beim Aussenden der elektromagnetischen Welle bereitstellen kann. Somit kann die elektromagnetische Welle mit einer hohen Sendeleistung mittels der einen Radarantenne ausgesendet werden und gleichzeitig mit einer hohen Empfindlichkeit von der anderen Radarantenne empfangen werden. Die Präzision des Radarsensors erhöht sich somit.

Ein erfindungsgemäßes Kraftfahrzeug umfasst zumindest eine erfindungsgemäße Sensorvorrichtung. Das Kraftfahrzeug ist insbesondere als Personenkraftwagen ausgebildet.

In einer Ausführungsform umfasst das Kraftfahrzeug ein Verkleidungsteil, welches eine Öffnung aufweist, wobei die Sensorvorrichtung derart zu der Öffnung angeordnet ist, dass die Ultraschallmembran das Ultraschallsignal und die zumindest eine Radarantenne die elektromagnetische Welle durch die Öffnung hindurch aussenden. Dies hat den Vorteil, dass so ein störender Einfluss des Verkleidungsteils, beispielsweise einer Verkleidung eines Stoßfängers des Kraftfahrzeugs, vermieden werden kann. Weiterhin ergibt sich der Vorteil, dass der störende Einfluss gleichermaßen für den Ultraschallsensor und für den Radarsensor reduziert bzw. vermieden werden kann. Es ist weiterhin unnötig, mehrere Öffnungen an dem Verkleidungsteil anzubringen, wie es für getrennt vorliegende Ultraschall- und Radarsensoren der Fall wäre. Es kann somit verhindert werden, unnötige Öffnungen in das Verkleidungsteil anzubringen, welche einen Stabilitätsverlust des Verkleidungsteils bedeuten können.

Ein erfindungsgemäßes Verfahren zum Herstellen einer erfindungsgemäßen Sensorvorrichtung weist folgende Schritte auf. Es wird die Ultraschallmembran bereitgestellt und das elektrische Isolationselement auf eine Oberfläche der Ultraschallmembran aufgebracht. Weiterhin wird ein elektrisch leitfähiges Material auf das elektrische Isolationselement aufgebracht und das elektrische leitfähige Material wird strukturiert, um die zumindest eine Radarantenne bereitzustellen. Das elektrische Isolationselement kann beispielsweise durch ein Beschichtungsverfahren auf die Oberfläche der Ultraschallmembran aufgebracht werden. Anschließend kann auf das elektrische Isolationselement eine Metallschicht vollflächig aufgebracht werden. Dies kann beispielsweise durch Bedampfen erfolgen. Danach kann eine Schutzschicht bzw. ein Fotolack auf die Metallschicht aufgebracht werden, die wiederum strukturiert wird. Schließlich kann die Metallschicht beispielsweise durch ein Ätzverfahren strukturiert werden. Vorteilhaft an diesem Verfahren ist die einfache und kostenarme Herstellungsweise.

Die mit Bezug auf die erfindungsgemäße Sensorvorrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Dabei zeigen:
- Fig. 1: in schematischer Draufsicht ein Kraftfahrzeug mit einer Sensorvorrichtung, wobei zwei Objekte in einem Umgebungsbereich des Kraftfahrzeugs angeordnet sind;
- Fig. 2: in schematischer Darstellung die Sensorvorrichtung mit einer Uitraschallmembran und vier gleichmäßig auf der Ultraschallmembran angeordneten Radarantennen;
- Fig. 3: in schematischer Seitendarstellung die Sensorvorrichtung, welche hinter einem Verkleidungsteil des Kraftfahrzeugs angeordnet ist, wobei das Verkleidungsteil eine Öffnung aufweist;
- Fig. 4: in schematischer Seitendarstellung die Sensorvorrichtung, welche hinter dem Verkleidungsteil angeordnet ist;
- Fig. 5: die Sensorvorrichtung in einer weiteren Ausführungsform mit der Ultraschallmembran und den vier gleichmäßig angeordneten Radarantennen;
- Fig. 6: in schematischer Darstellung die Sensorvorrichtung mit der Ultraschallmembran und den Radarantennen, welche Radarantennen zum Aussenden einer elektromagnetischen Welle und Radarantennen zum Empfangen der elektromagnetischen Welle aufweisen; und
- Fig. 7: in schematischer Darstellung die Sensorvorrichtung in einer weiteren Ausführungsform mit der Ultraschallmembran und diagonal angeordneten Radarantennen.

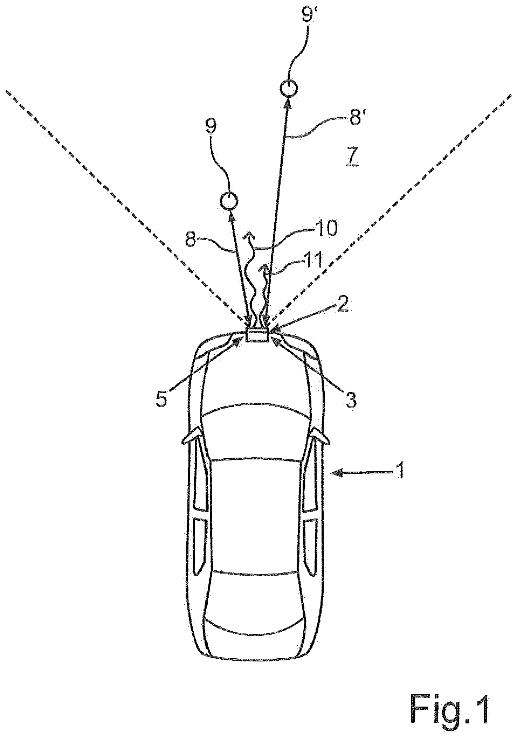

In Fig. 1 ist schematisch eine Draufsicht auf ein Kraftfahrzeug 1 gemäß einer Ausführungsform der Erfindung dargestellt. Das Kraftfahrzeug 1 umfasst eine Sensorvorrichtung 2. Die Sensorvorrichtung 2 dient dem Erfassen eines Objekts 9, 9' in einem Umgebungsbereich 7 des Kraftfahrzeugs 1. Die Sensorvorrichtung 2 umfasst wiederum einen Ultraschallsensor 3 und einen Radarsensor 5. Im Ausführungsbeispiel ist die Sensorvorrichtung 2 an einer Front des Kraftfahrzeugs 1 angeordnet und erfasst den Umgebungsbereich 7 vor dem Kraftfahrzeug 1. Es ist aber auch eine Anwendung mit einer beliebigen Anordnung der Sensorvorrichtung 2 an dem Kraftfahrzeug 1 möglich. Im Ausführungsbeispiel gemäß Fig. 1 ist nur eine der Sensorvorrichtungen 2 dargestellt. Es können jedoch auch mehrere solche Sensorvorrichtungen 2 eingesetzt werden. Die Sensorvorrichtung 2 kann einen Abstand 8, 8' von dem Kraftfahrzeug 1 zu einem Objekt 9, 9' bestimmen. Dies kann durch den Ultraschallsensor 3 und/oder den Radarsensor 5 erfolgen.

Der Ultraschallsensor 3 weist eine Ultraschallmembran 4, die die z. B. aus Aluminium gefertigt ist. Diese Ultraschallmembran 4 wird durch einen entsprechenden Aktor in Schwingungen versetzt. Beispielsweise wird die Ultraschallmembran 4 mit einer Frequenz von etwa 52 kHz betrieben. Somit kann die Ultraschallmembran 4 ein Ultraschallsignal 10 aussenden. Dieses Ultraschallsignal 10 trifft auf das Objekt 9, 9' und wird von dem Objekt 9, 9' reflektiert. Das reflektierte Ultraschallsignal 10 wird wieder von dem Ultraschallsensor 3 empfangen. Zum Empfangen des reflektierten Ultraschallsignals 10 kann die Ultraschallmembran 4 verwendet werden, welche für eine vorbestimmte Zeitdauer nicht von dem Aktor angesteuert wird und somit gleichzeitig als Ultraschallempfangseinheit dient. Anhand der Laufzeit zwischen dem Aussenden des Ultraschallsignals 10 und dem Empfangen des reflektierten Ultraschallsignals 10 kann ein Abstand 8, 8' zwischen dem Kraftfahrzeug 1 und dem Objekt 9, 9' bestimmt werden.

Der Radarsensor 5 weist zumindest eine Radarantenne 6 auf, die ein Radarsignal in Form einer elektromagnetischen Welle 11 aussendet. Die elektromagnetische Welle 11 kann beispielsweise eine Frequenz von 24 GHz, 79 GHz oder 123 GHz aufweisen. Auch die elektromagnetische Welle 11 wird von dem Objekt 9, 9' reflektiert und wieder von dem Radarsensor 5 empfangen. Zum Empfangen des reflektierten Radarsignals kann die Radarantenne 6 verwendet werden. Alternativ dazu kann eine separate Antenne als Radarempfangseinheit verwendet werden. Anhand der Laufzeit zwischen dem Aussenden der elektromagnetischen Welle 11 und dem Empfangen der reflektierten elektromagnetischen Welle 11 kann der Abstand 8, 8' zwischen dem Kraftfahrzeug 1 und dem Objekt 9, 9' bestimmt werden.

Die Kombination des Ultraschallsensors 3 und des Radarsensors 5 ermöglicht beispielsweise, dass das erste Objekt 9, welches beispielsweise den Abstand 8 von 0 bis 10 m aufweist, mittels des Ultraschallsensors 3 erfasst wird, während der Radarsensor 5 in einem inaktiven Zustand sein kann. Es ist aber auch möglich, dass das Objekt 9 von dem Ultraschallsensor 3 und dem Radarsensor 5 gleichzeitig erfasst wird. Dies kann hilfreich sein, um die Präzision und/oder Zuverlässigkeit der Messung des Abstands 8 zu erhöhen.

Die Sensorvorrichtung 2 ermöglicht es aber auch den Abstand 8' von einem Objekt 9', welches sich beispielsweise 10 bis 100 m von dem Kraftfahrzeug 1 entfernt befindet, zu bestimmen. Hierfür wird der Radarsensor 5 aktiviert, während sich der Ultraschallsensor 3 in einem inaktiven Zustand befinden kann. Diese Vorgehensweise kann sinnvoll sein, da üblicherweise die Reichweite des Ultraschallsensors 3 geringer ist als die des Radarsensors 5. Mit der Sensorvorrichtung 2 kann also das nähere erste Objekt 9 erfasst werden und der Abstand 8 bestimmt werden. Zudem kann das weiter entfernte zweite Objekt 9' erfasst werden und der Abstand 8' bestimmt werden. Für nahe Objekte, wie das erste Objekt 9, können auch beide Sensoren, das heißt der Ultraschallsensor 3 und der Radarsensor 5, genutzt werden.

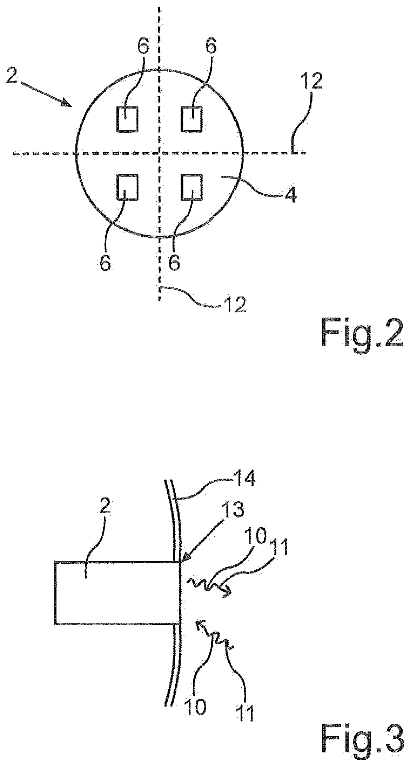

Fig. 2 zeigt eine erste Ausführungsform der Sensorvorrichtung 2. Hierbei sind vier Radarantennen 6 direkt auf der Ultraschallmembran 4 des Ultraschallsensors 3 angeordnet. Die Radarantennen 6 sind beispielsweise plattenförmig ausgebildet. Insbesondere sind die Radarantennen 6 als sogenannte Patchantennen ausgebildet. Die Radarantennen 6 können auch mittels Leiterplattentechnik hergestellt sein. Die Radarantennen 6 können eine Leiterbahnstruktur umfassen, die beispielsweise aus Kupfer gebildet ist. Ebenfalls nicht näher dargestellte Zuleitungselemente, die der elektrischen Kontaktierung der Radarantennen 6 dienen, können ebenfalls aus Kupfer gefertigt sein.

Die Ultraschallmembran 4 ist in diesem Ausführungsbeispiel rund ausgebildet. Die Ultraschallmembran 4 kann beispielsweise aus Aluminium gefertigt sein. Zwischen der Ultraschallmembran 4 und den Radarantennen 6 befindet sich ein hier nicht dargestelltes elektrisches Isolationselement. Dieses elektrische Isolationselement kann aus einem Kunststoff oder einer Keramik gefertigt sein. Das elektrische Isolationselement kann nur in den jeweiligen Bereichen zwischen der Ultraschallmembran 4 und den Radarantennen 6 angeordnet sein. Das elektrische Isolationselement kann auch dazu ausgebildet sein, die jeweilige Radarantenne 6 mit der Ultraschallmembran 4 stoffschlüssig zu verbinden. Das elektrische Isolationselement kann durch einen Klebstoff bereitgestellt werden, mit dem die jeweiligen Radarantennen 6 auf die Ultraschallmembran geklebt sind. Alternativ dazu kann das elektrische Isolationselement die Oberfläche der Ultraschallmembran 4, die den Radarantennen 6 zugewandt ist, vollständig bedecken. In diesem Fall kann das elektrische Isolationselement als Beschichtung ausgebildet sein.

Auf einer Oberfläche der Ultraschallmembran 4 sind die Radarantennen 6 achsensymmetrisch bezüglich der beiden Symmetrieachsen 12 angeordnet. Durch die symmetrische Anordnung der Radarantennen 6 auf der Ultraschallmembran 4 kann erreicht werden, dass die Ultraschallmembran 4 trotz der zusätzlichen Masse durch die Radarantennen 6 gleichmäßig schwingt. Die Anordnung der Radarantennen 6 auf der Ultraschallmembran 4 ist beliebig, jedoch derart, dass die Ultraschallmembran 4 möglichst wenig in ihrer Schwingung beeinflusst wird. Die Ultraschallmembran 4 kann im Vergleich zu einer üblicherweise verwendeten Ultraschallmembran an die Radarantennen 6 angepasst sein. Zu diesem Zweck kann die Formgebung der Ultraschallmembran 4 an die Radarantenne 6 angepasst sein. Beispielsweise kann die Dicke der Ultraschallmembran 4 an die zusätzliche Masse, die durch die Radarantennen 6 und das elektrische Isolationselement bereitgestellt wird, angepasst sein. Insbesondre ist die so angepasst, dass sie mit den zusätzlichen Radarantennen 6 eine vorbestimmte Resonanzfrequenz, insbesondere von 52 kHz aufweist. Dabei kann es auch vorgesehen sein, dass die Ultraschallmembran 4 in den Bereichen, an denen die Radarantennen 6 angeordnet sind, eine entsprechende Aussparung aufweist. Auf diese Weise kann erreicht werden, dass die Schwingungsmode und/oder die Schwingungsmoden der Ultraschallmembran 4 durch das zusätzlich aufgebrachte elektrische Isolationselement und die zusätzlich aufgebrachten Radarantennen 6 möglichst wenig beeinflusst wird.

Im Betrieb der Sensorvorrichtung 2 können der Ultraschallsensor 3 und der Radarsensor 5 zeitlich versetzt zueinander betrieben werden. In diesem Fall erfolgt das Aussenden und/oder das Empfangen des Ultraschallsignals 10 unabhängig von dem Aussenden und/oder dem Empfangen der elektromagnetischen Welle 11. Der Ultraschallsensor 3 und der Radarsensor 5 können auch gleichzeitig betreiben werden. In diesem Fall wird also die Ultraschallmembran 4 zum Aussenden des Ultraschallsignals 10 in mechanische Schwingungen versetzt. Gleichzeitig werden die Radarantennen 6 mit einem elektrischen Signal beaufschlagt, so dass diese das Radarsignal bzw. die elektromagnetische Welle 11 aussenden. Hierbei werden die Radarantennen 6 mit der Ultraschallmembran 4 bewegt. Diese Bewegung der Radarantennen 6 kann auch auftreten, wenn die Radarantennen 6 eine reflektierte elektromagnetische Welle 11 empfangen. Diese Bewegung der Radarantennen 6 kann bei der Ermittlung der Laufzeit der elektromagnetischen Welle 11 berücksichtigt werden. Zudem kann eine mögliche Veränderung der Hauptabstrahlrichtung der Radarantennen 6, welche durch die Bewegung der Radarantennen 6 hervorgerufen werden kann, berücksichtigt werden. Diese Bewegung der Radarantennen 6 kann aber auch vernachlässigt werden, da die Positionsänderung der Radarantennen 6 im Vergleich zu dem Abstand 8, 8' gering ist.

Fig. 3 zeigt eine Anordnung der Sensorvorrichtung 2 zu einem Verkleidungsteil 14 des Kraftfahrzeugs 1. Das Verkleidungsteil 14 kann beispielsweise ein Stoßfänger sein und aus Kunststoff gefertigt sein. Das Verkleidungsteil 14 weist eine Öffnung 13 auf. Vorliegend ist die Sensorvorrichtung 2 derart zu der Öffnung 13 des Verkleidungsteils 14 angeordnet, dass das Ultraschallsignal 10 und die elektromagnetische Welle 11 durch die Öffnung 13 hindurch ausgesendet und empfangen werden können. Es ist somit möglich, dass der Ultraschallsensor 3 und der Radarsensor 5 den Abstand 8 zu dem Objekt 9 bestimmen können und nur die eine Öffnung 13 nötig ist, um das Ultraschallsignal 10 und die elektromagnetische Welle 11 auszusenden und zu empfangen. Somit wird das Ultraschallsignal 10 und/oder die elektromagnetische Welle 11 nicht durch das Verkleidungsteil 14 abgeschwächt bzw. störend beeinflusst.

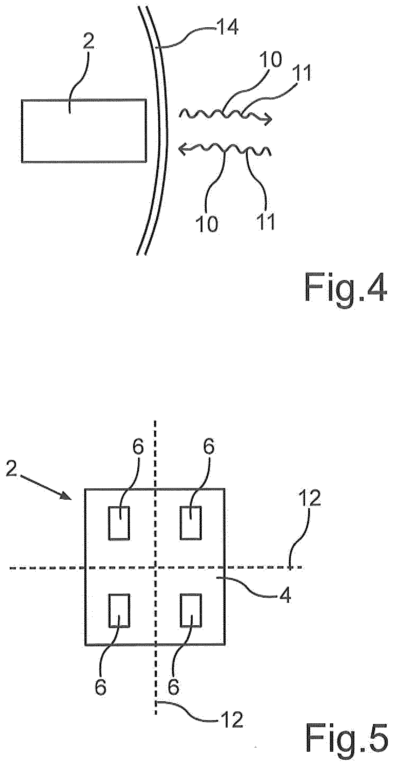

Alternativ kann es vorgesehen sein, dass die Sensorvorrichtung 2 hinter dem Verkleidungsteil 14 angeordnet ist. Dies ist in dem Ausführungsbeispiel gemäß Fig. 4 veranschaulicht. Hierdurch kann ein Anpassen des Verkleidungsteils 14 vermieden werden. Zudem bedarf es keiner Öffnung in dem Verkleidungsteil 14, wodurch die Robustheit des Verkleidungsteils 14 erhöht werden kann. Des Weiteren kann die Sensorvorrichtung 2 durch das Verkleidungsteil 14 vor Umwelteinflüssen geschützt werden.

Fig. 5 zeigt eine weitere Ausführungsform der Sensorvorrichtung 2. Hierbei ist die Ultraschallmembran 4 reckeckig ausgebildet. Auch hier sind vier Radarantennen 6 gleichmäßig verteilt auf der Oberfläche der Ultraschallmembran 4 angeordnet. Hierbei kann es auch vorgesehen sein, dass eine erste Gruppe der Radarantennen 6 zu Aussenden der elektromagnetischen Welle 11 und eine zweite Gruppe der Radarantennen 6 zum Empfangen der reflektierten elektromagnetischen Welle 11 ausgebildet ist. Beispielsweise können zwei der vier Radarantennen 6 senden und die anderen zwei Radarantennen 6 empfangen.

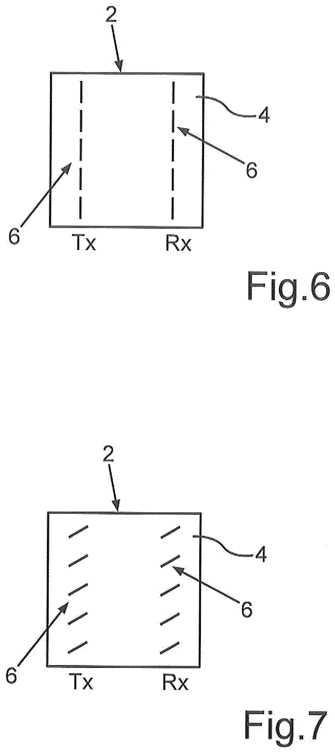

Fig. 6 zeigt eine weitere Ausgestaltung der Sensorvorrichtung 2. Hierbei sind insgesamt zehn Radarantennen 5 auf der Ultraschallmembran 4 angeordnet. Hierbei sind die Radarantennen 6 sendende Radarantennen 6 und empfangende Radarantennen 6 aufgeteilt. Die sendenden Radarantennen 6 senden die elektromagnetische Welle 11 aus und die empfangenden Radarantennen 6 empfangen die reflektierte elektromagnetische Welle 11. Vorliegend sind in einer ersten Spalte Tx die sendenden Radarantennen 6 und in einer zweiten Spalte Rx die empfangenden Radarantennen 6 angeordnet.

Die beiden Spalten Tx und Rx können im eingebauten Zustand der Sensorvorrichtung 2 entlang einer Hochachse oder entlang einer Querachse des Kraftfahrzeugs verlaufen. Die sendenden Radarantennen 6 können beispielsweise derart ausgebildet sein, dass sie im Vergleich zu dem empfangenden Radarantennen 6 eine höhere Sendeleistung beim Aussenden der elektromagnetischen Welle 11 bereitstellen können. Die empfangenden Radarantennen 6 können im Vergleich zu den sendenden Radarantennen 6 so ausgebildet sein, dass sie eine höhere Empfindlichkeit beim Empfangen der reflektierten elektromagnetischen Welle 11 aufweisen. Es ist somit möglich, die empfangenden Antennen 6 empfindlicher zu betreiben und eine höhere Präzision und eine höhere Zuverlässigkeit der Messung des Abstandes 8, 8' zu ermöglichen.

Fig. 7 zeigt eine weitere Ausführungsform der Sensorvorrichtung 2. Auch hier sind insgesamt zehn Radarantennen 6 auf der Ultraschallmembran 4 angeordnet. Auch hier sind die Radarantennen 6 in sendende Radarantennen 6 und in empfangende Radarantennen 6 aufgeteilt, wobei in der ersten Spalte Tx die sendenden Radarantennen 6 und in der zweiten Spalte Rx die empfangenden Radarantennen 6 angeordnet sind. Die Radarantennen 6 sind im Vergleich zu den Radarantennen 6 gemäß dem Ausführungsbeispiel von Fig. 6 jeweils um einen vorbestimmten Winkel gedreht angeordnet.

## Patentansprüche

1. Sensorvorrichtung (2) für ein Kraftfahrzeug (1) zum Bestimmen eines Abstandes (8, 8') von dem Kraftfahrzeug (1) zu einem Objekt (9, 9') in einem Umgebungsbereich (7) des Kraftfahrzeuges (1) mit einem Ultraschallsensor (3), welcher eine Ultraschallmembran (4) zum Aussenden eines Ultraschallsignals (10) und zum Empfangen des reflektierten Ultraschallsignals (10) aufweist, wobei der Ultraschallsensor (3) dazu ausgelegt ist, das Objekt (9, 9') anhand dem von dem Objekt (9, 9') reflektierten Ultraschallsignal (10) zu erfassen, und einem Radarsensor (5), welcher zumindest eine Radarantenne (6) zum Aussenden einer elektromagnetischen Welle (11) aufweist, wobei der Radarsensor (5) dazu ausgelegt ist, das Objekt (9, 9') anhand der von dem Objekt (9, 9') reflektierten elektromagnetischen Welle (11) zu erfassen, **dadurch gekennzeichnet, dass** die zumindest eine Radarantenne (6) zum Aussenden der elektromagnetischen Welle (11) auf der Ultraschallmembran (4) zum Aussenden des Ultraschallsignals (10) und zum Empfangen des reflektierten Ultraschallsignals (10) angeordnet ist.

2. Sensorvorrichtung (2) nach Anspruch 1,
**dadurch gekennzeichnet, dass**
die zumindest eine Radarantenne (6) als Patchantenne ausgebildet ist.

3. Sensorvorrichtung (2) nach einem der vorhergehenden Ansprüche,
**dadurch gekennzeichnet, dass**
die Ultraschallmembran (4) aus Aluminium gefertigt ist.

4. Sensorvorrichtung (2) nach einem der vorhergehenden Ansprüche,
**dadurch gekennzeichnet, dass**
zwischen der Ultraschallmembran (4) und der zumindest einen Radarantenne (6) ein elektrisches Isolationselement angeordnet ist.

5. Sensorvorrichtung (2) nach einem der vorhergehenden Ansprüche,
**dadurch gekennzeichnet, dass**
die zumindest eine Radarantenne (6) aus Kupfer gefertigt ist.

6. Sensorvorrichtung (2) nach einem der vorhergehenden Ansprüche,
**dadurch gekennzeichnet, dass**
die Sensorvorrichtung (2) zumindest ein Zuleitungselement zum elektrischen Kontaktieren der zumindest einen Radarantenne (6) umfasst, wobei das zumindest eine Zuleitungselement aus dem gleichen Material wie die zumindest eine Radarantenne (6) gefertigt ist.

7. Sensorvorrichtung (2) nach einem der vorhergehenden Ansprüche,
**dadurch gekennzeichnet, dass**
die zumindest eine Radarantenne (6) zusätzlich dazu ausgebildet ist, die von dem Objekt (9, 9') reflektierte elektromagnetische Welle (11) zu empfangen.

8. Sensorvorrichtung (2) nach einem der vorhergehenden Ansprüche,
**dadurch gekennzeichnet, dass**
der Radarsensor (5) zumindest zwei Radarantennen (6) umfasst, wobei die zumindest zwei Radarantennen (6) gleichmäßig verteilt auf der Ultraschallmembran (4) angeordnet sind.

9. Sensorvorrichtung (2) nach Anspruch 8,
**dadurch gekennzeichnet, dass**
die zumindest zwei Radarantennen (6) bezüglich zumindest einer Symmetrieachse (12) der Ultraschallmembran (4) symmetrisch zueinander angeordnet sind.

10. Sensorvorrichtung (2) nach Anspruch 8 oder 9
**dadurch gekennzeichnet, dass**
die zumindest zwei Radarantennen (6) entlang einer Erstreckungsrichtung der Ultraschallmembran (4), welche im bestimmungsgemäßen Einbau des Ultraschallsensors (3) in dem Kraftfahrzeug (1) parallel zu einer Fahrbahnoberfläche verläuft, nebeneinander angeordnet sind.

11. Sensorvorrichtung (2) nach einem der Ansprüche 8 bis 10,
**dadurch gekennzeichnet, dass**
eine erste der zumindest zwei Radarantennen (6) zum Aussenden der elektromagnetischen Welle (11) ausgebildet ist und eine zweite der zumindest zwei Radarantennen (6) zum Empfangen der von dem Objekt (9, 9') reflektierten elektromagnetischen Welle (11) ausgebildet ist.

12. Kraftfahrzeug (1) mit einer Sensorvorrichtung (2) einem der vorhergehenden Ansprüche.

13. Kraftfahrzeug (1) nach Anspruch 12,
**dadurch gekennzeichnet, dass**
das Kraftfahrzeug (1) ein Verkleidungsteil (14) umfasst, welches eine Öffnung (13) aufweist, wobei die Sensorvorrichtung (2) derart zu der Öffnung (13) angeordnet ist, dass die Ultraschallmembran (4) das Ultraschallsignal (10) und die zumindest eine Radarantenne (6) die elektromagnetische Welle (11) durch die Öffnung (13) hindurch aussenden.

14. Verfahren zum Herstellen einer Sensorvorrichtung (2) nach einem der Ansprüche 1 bis 11 mit den Schritten:
- Bereistellen der Ultraschallmembran (4),
- Aufbringen des elektrischen Isolationselements auf eine Oberfläche der Ultraschallmembran (4),
- Aufbringen eines elektrisch leitfähigen Materials auf das elektrische Isolationselement und
- Strukturieren des elektrisch leitfähigen Materials zum Bereitstellen der zumindest einen Radarantenne (6)

## Claims

1. Sensor device (2) for a motor vehicle (1) for determining a distance (8, 8') from the motor vehicle (1) to an object (9, 9') in an area (7) surrounding the motor vehicle (1), having an ultrasonic sensor (3) which has an ultrasonic diaphragm (4) for emitting an ultrasonic signal (10) and for receiving the reflected ultrasonic signal (10), the ultrasonic sensor (3) being designed to detect the object (9, 9') on the basis of the ultrasonic signal (10) reflected by the object (9, 9'), and a radar sensor (5) which has at least one radar antenna (6) for emitting an electromagnetic wave (11), the radar sensor (5) being designed to detect the object (9, 9') on the basis of the electromagnetic wave (11) reflected by the object (9, 9'),
**characterized in that** at least one radar antenna (6) for emitting the electromagnetic wave (11) is arranged on the ultrasonic diaphragm (4) for emitting the ultrasonic signal (10) and for receiving the reflected ultrasonic signal (10).

2. Sensor device (2) according to Claim 1,
**characterized in that**
the at least one radar antenna (6) is in the form of a patch antenna.

3. Sensor device (2) according to one of the preceding claims,
**characterized in that**
the ultrasonic diaphragm (4) is produced from aluminium.

4. Sensor device (2) according to one of the preceding claims,
**characterized in that**
an electrical insulation element is arranged between the ultrasonic diaphragm (4) and the at least one radar antenna (6).

5. Sensor device (2) according to one of the preceding claims,
**characterized in that**
the at least one radar antenna (6) is produced from copper.

6. Sensor device (2) according to one of the preceding claims,
**characterized in that**
the sensor device (2) comprises at least one supply line element for making electrical contact with the at least one radar antenna (6), the at least one supply line element being produced from the same material as the at least one radar antenna (6).

7. Sensor device (2) according to one of the preceding claims,
**characterized in that**
the at least one radar antenna (6) is additionally designed to receive the electromagnetic wave (11) reflected by the object (9, 9').

8. Sensor device (2) according to one of the preceding claims,
**characterized in that**
the radar sensor (5) comprises at least two radar antennas (6), the at least two radar antennas (6) being arranged in a manner uniformly distributed on the ultrasonic diaphragm (4).

9. Sensor device (2) according to Claim 8,
**characterized in that**
the at least two radar antennas (6) are arranged symmetrically with respect to one another with regard to at least one axis of symmetry (12) of the ultrasonic diaphragm (4).

10. Sensor device (2) according to Claim 8 or 9,
**characterized in that**
the at least two radar antennas (6) are arranged beside one another along a direction of extent of the ultrasonic diaphragm (4) which runs parallel to a road surface when the ultrasonic sensor (3) is properly installed in the motor vehicle (1).

11. Sensor device (2) according to one of Claims 8 to 10,
**characterized in that**
a first of the at least two radar antennas (6) is designed to emit the electromagnetic wave (11) and a second of the at least two radar antennas (6) is designed to receive the electromagnetic wave (11) reflected by the object (9, 9').

12. Motor vehicle (1) having a sensor device (2) according to one of the preceding claims.

13. Motor vehicle (1) according to Claim 12,
**characterized in that**
the motor vehicle (1) comprises a trim part (14) which has an opening (13), the sensor device (2) being arranged with respect to the opening (13) in such a manner that the ultrasonic diaphragm (4) emits the ultrasonic signal (10) and the at least one radar antenna (6) emits the electromagnetic wave (11) through the opening (13).

14. Method for producing a sensor device (2) according to one of Claims 1 to 11, having the steps of:
- providing the ultrasonic diaphragm (4),
- applying the electrical insulation element to a surface of the ultrasonic diaphragm (4),
- applying an electrically conductive material to the electrical insulation element, and
- structuring the electrically conductive material in order to provide the at least one radar antenna (6).

## Revendications

1. Dispositif détecteur (2) destiné à un véhicule automobile (1), pour déterminer une distance (8, 8') entre le véhicule automobile (1) et un objet (9, 9') dans une zone environnante (7) du véhicule automobile (1), doté d'un capteur à ultrasons (3) qui comporte une membrane à ultrasons (4) destinée à émettre un signal ultrasonore (10) et à recevoir le signal ultrasonore (10) réfléchi, dans lequel le capteur à ultrasons (3) est conçu pour détecter l'objet (9, 9') sur la base du signal ultrasonore (10) réfléchi par l'objet (9, 9'),
et un capteur radar (5) qui comporte au moins une antenne radar (6) destinée à émettre une onde électromagnétique (11),
dans lequel le capteur radar (5) est conçu pour détecter l'objet (9, 9') sur la base de l'onde électromagnétique (11) réfléchie par l'objet (9, 9'), **caractérisé en ce que** ladite au moins une antenne radar (6) destinée à émettre l'onde électromagnétique (11) est disposée sur la membrane à ultrasons (4) destinée à émettre le signal ultrasonore (10) et à recevoir le signal ultrasonore (10) réfléchi.

2. Dispositif détecteur (2) selon la revendication 1,
**caractérisé en ce que** ladite au moins une antenne radar (6) est réalisée sous la forme d'une antenne plaque.

3. Dispositif détecteur (2) selon l'une quelconque des revendications précédentes,
**caractérisé en ce que** la membrane à ultrasons (4) est constituée d'aluminium.

4. Dispositif détecteur (2) selon l'une quelconque des revendications précédentes,
**caractérisé en ce qu'**un élément d'isolation électrique est disposé entre la membrane à ultrasons (4) et au moins une antenne radar (6).

5. Dispositif détecteur (2) selon l'une quelconque des revendications précédentes,
**caractérisé en ce que** ladite au moins une antenne radar (6) est constituée de cuivre.

6. Dispositif détecteur (2) selon l'une quelconque des revendications précédentes,
**caractérisé en ce que** le dispositif détecteur (2) comprend au moins un élément d'alimentation destiné à être mis en contact électrique avec ladite au moins une antenne radar (6), dans lequel ledit au moins un élément d'alimentation est constitué d'un matériau identique à celui de ladite au moins une antenne (6).

7. Dispositif détecteur (2) selon l'une quelconque des revendications précédentes,
**caractérisé en ce que** ladite au moins une antenne radar (6) est en outre conçue pour recevoir l'onde électromagnétique (11) réfléchie par l'objet (9, 9').

8. Dispositif détecteur (2) selon l'une quelconque des revendications précédentes,
**caractérisé en ce que** le capteur radar (5) comprend au moins deux antennes radar (6), dans lequel lesdites au moins deux antennes radar (6) sont disposées de manière uniformément répartie sur la membrane à ultrasons (4).

9. Dispositif détecteur (2) selon la revendication 8,
**caractérisé en ce que** lesdites au moins deux antennes radar (6) sont disposées de manière symétrique l'une de l'autre par rapport à au moins un axe de symétrie (12) de la membrane à ultrasons (4).

10. Dispositif détecteur (2) selon la revendication 8 ou 9,
**caractérisé en ce que** lesdites au moins deux antennes radar (6) sont disposées côte à côte le long d'une direction d'extension de la membrane à ultrasons (4) qui s'étend, lors d'une utilisation conforme du capteur à ultrasons (3) dans le véhicule automobile (1), parallèlement à une surface routière.

11. Dispositif détecteur (2) selon l'une quelconque des revendications 8 à 10,
**caractérisé en ce qu'**une première desdites au moins deux antennes radar (6) est conçue pour émettre l'onde électromagnétique (11) et **en ce qu'**une deuxième desdites au moins deux antennes radar (6) est conçue pour recevoir l'onde électromagnétique (11) réfléchie par l'objet (9, 9').

12. Véhicule automobile (1) comportant un dispositif détecteur (2) selon l'une quelconque des revendications précédentes.

13. Véhicule automobile (1) selon la revendication 12,
**caractérisé en ce que** le véhicule automobile (1) comprend une pièce d'habillage (14) qui présente une ouverture (13), dans lequel le dispositif détecteur (2) est agencé dans l'ouverture (13) de manière à ce que la membrane à ultrasons (4) émette le signal ultrasonore (10) et à ce que ladite au moins une antenne radar (6) émette l'onde électromagnétique (11) à travers l'ouverture (13).

14. Procédé de fabrication d'un dispositif détecteur (2) selon l'une quelconque des revendications 1 à 11, comportant les étapes consistant à :
- fournir la membrane à ultrasons (4),
- placer l'élément d'isolation électrique sur une surface de la membrane à ultrasons (4),
- placer un matériau électriquement conducteur sur l'élément d'isolation électrique, et
- structurer le matériau électriquement conducteur pour produire ladite au moins une antenne radar (6).
